(19) Europäisches Patentamt / European Patent Office / Office européen des brevets

(11) **EP 2 482 117 A1**

(12) **EUROPEAN PATENT APPLICATION**
published in accordance with Art. 153(4) EPC

(43) Date of publication:
**01.08.2012 Bulletin 2012/31**

(51) Int Cl.:
***G02B 27/22*** *(2006.01)*

(21) Application number: **10818405.2**

(22) Date of filing: **21.09.2010**

(86) International application number:
**PCT/CN2010/077182**

(87) International publication number:
**WO 2011/035711 (31.03.2011 Gazette 2011/13)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **25.09.2009 CN 200910093002**

(71) Applicant: **Li, Zhiyang
Wuhan, Hubei 430079 (CN)**

(72) Inventor: **Li, Zhiyang
Wuhan, Hubei 430079 (CN)**

(74) Representative: **Kelly, Madeleine
FRKelly
27 Clyde Road
Ballsbridge
Dublin 4 (IE)**

(54) **THREE-DIMENSIONAL DISPLAY DEVICE BASED ON RANDOM CONSTRUCTIVE INTERFERENCE PRINCIPLE**

(57)    The present invention discloses a device for three-dimensional display based on random constructive interference principle. It modulates the amplitude and phase of incident laser beam with amplitude-phase-modulator-array and produces randomly distributed coherent secondary light source array by means of reflective or transmission holographic optical elements or binary optical elements, or microlenses with oblique axes. It forms discrete 3D images via constructive interference of light rays coming from these coherent secondary light sources. It uses low resolution gray scale liquid crystal panels and adopts a strategy of three primary color laser beams illuminate different sub-divisions to achieve color 3D display in real time. The invention could be widely applied in 3D display for computer and television, 3D human-machine interaction, robotic vision etc.

Fig.1

**Description**

<u>TECHNICAL FIELD OF THE INVENTION</u>

The present invention relates to devices for 3D display based on random constructive interference principle. The invention could be used as computer or TV display screens and used for intelligent human-machine interaction, robotic vision etc. It could be applied in such field as education, scientific research, entertainment, advertisement and so on.

<u>BACKGROUND OF THE INVENTION</u>

Liquid crystal display has been growing rapidly for the past few decades. Liquid crystal panels with a dimension from several tenths or inches to several tens of inches are now commercially available. Nevertheless most liquid crystal panels are used for two dimension planar display. The pixel pitch of even a projection liquid crystal panel is on ten micrometers scale. They provide a poor resolution compared with wavelength of visible light. So they could not replace holographic plates for large size and high quality 3D holographic display.

The Chinese patent entitled "A method and devices for 3-D display based on random constructive interference" (Application number: 200810046861.8) put forth a new method for 3D display using low resolution liquid crystal panels. The key is to transform each pixel of a liquid crystal panel into an independent secondary light source. Then discrete voxels could be formed in the 3D space via constructive interference of light rays coming from these secondary light sources. To eliminate multiple images arising from high order diffraction, the positions of these secondary light sources should be arranged randomly. The patent provided several designs and emphasized on the realization of 3D display based on random constructive interference using the conventional off-the-shelf commercial liquid crystal panels. However if dedicated liquid crystal panels are designed for 3D display based on random constructive interference, the system would perform even better. The present invention provides several new designs concerning the system structure and its components, which improves the performances of the system with simplified structure. It also lowers the manufacturing difficulty as well as the cost.

<u>SUMMARY OF THE INVENTION</u>

The aim of present invention is to provide devices for 3D display based on random constructive interference with higher energy efficiency, better image quality, lower manufacturing difficulty and cost.

A 3D display device based on random constructive interference of the present invention which is to achieve the above aim comprising:

a coherent light source that emits coherent laser beam of three primary colors;
an illuminating optic system disposed to receive the thin coherent laser beam of three primary colors emitted from the coherent light source and transform it into evenly distributed wide coherent laser beams with each primary color separated from each other;
an amplitude-phase-modulator-array disposed to modulate the amplitudes and phases of the wide coherent laser beams of three primary colors emitted from the illuminating optic system to produce an independent-sub-laser-beam-array; and
a coherent-secondary-light-source-generator-array disposed and aligned with the amplitude-phase-modulator-array, so that each coherent-secondary-light-source-generator of the coherent-secondary-light-source-generator-array respectively receives an independent-sub-laser-beam from one corresponding amplitude-phase-modulator in the amplitude-phase-modulator-array to create a coherent secondary light source array in which the positions of the secondary light sources are of a random distribution and the light cones emitted by the secondary light sources overlap within the 3D imaging volume.

Wherein, the coherent-secondary-light-source-generator-array is made up of a transmission holographic-optical-element-array, in which each transmission holographic optical element bears interference patterns that transmits and focuses an independent-sub-laser-beam into a secondary coherent light source with random position; or the coherent-secondary-light-source-generator-array is made up of a reflective holographic-optical-element-array, in which each reflective holographic optical element bears interference patterns that reflects and focuses an independent-sub-laser-beam into a secondary coherent light source with random position.

Wherein, the interference patterns on a transmission holographic optical element are a stack of three groups of interference patterns, each group being made for each primary color; or the interference patterns on a reflective holographic optical element are a stack of three groups of interference patterns, each group being made for each primary color.

Wherein, the coherent-secondary-light-source-generator-array is made up of a binary-optical-element-array, in which each binary optical element plays the functions of a microlens and a microprism; the microstructure on its surface is designed to focus an independent-sub-laser-beam into a secondary coherent light source with random position.

Wherein, the coherent-secondary-light-source-generator-array is made up of a reflective-microlens-array; the optic axis of each reflective microlens is deflected to focus an independent-sub-laser-beam into a secondary coherent light source with random position; or the coherent-secondary-light-source-generator-array is made up of a transmission-microlens-array; the optic axis of each transmission microlens is deflected to focus an independent-sub-laser-beam into a secondary coherent light source with random position.

Wherein, the amplitude-phase-modulator-array is made up of transmission pure-phase-modulation liquid crystal panels, within which the orientations of the oriented films for liquid crystal molecules on both plates beside the liquid crystal layer are the same to make a zero twist angle of liquid crystal molecules, meanwhile the thickness of the liquid crystal layer and birefractive index difference of liquid crystal material are chosen to obtain a phase modulation range of $0\sim2\pi$; or the amplitude-phase-modulator-array is made up of reflective pure-phase-modulation liquid crystal panels, within which the orientations of the oriented films for liquid crystal molecules on both plates beside the liquid crystal layer are the same to make a zero twist angle of liquid crystal molecules, meanwhile the thickness of the liquid crystal layer and birefractive index difference of liquid crystal material are chosen to obtain a phase modulation range of $0\sim2\pi$.

Wherein, the amplitude-phase-modulator-array is an integrated panel consisting of a rear plate, the first liquid crystal layer, a middle plate, the second liquid crystal layer, a front plate and a polarizer glued on the front plate; the rear plate, the first liquid layer and the middle plate make up the first gray scale liquid crystal panel, while the middle plate, the second liquid crystal layer, the front plate and the polarizer make up the second gray scale liquid crystal panel; the pixels of both the first gray scale liquid crystal panel and the second gray scale liquid crystal panel are aligned with each other, possessing the same two-dimensional periodic arrangement; wherein the first gray scale liquid crystal panel is a transmission pure-phase-modulation liquid crystal panel, while the second gray scale liquid crystal panel is set in amplitude-mostly mode by turning the orientations of the oriented films on the middle plate and the front plate and the polarizing direction of the polarizer.

Wherein, the illuminating optic system that receives the thin coherent laser beam of three primary colors emitted from the coherent light source and transform it into evenly distributed wide beams with each primary color separated from each other consists of two perpendicularly placed groups of parallel planar beam splitter array;

Wherein, each parallel planar beam splitter in the first group of parallel planar beam splitter array has the same shape and the same dimension; they are placed in parallel along an axis with the same orientation and equal interval between them; adjust the interval between adjacent parallel planar beam splitters in the first group, meanwhile increase the reflectivity of each beam splitter along the propagation direction of light so that after the reflection of the first group of parallel planar beam splitter array the parallel thin laser beam emitted from the polarized coherent light source turns into an evenly and continuously distributed line shaped parallel laser beam.

Wherein, each parallel planar beam splitter in the second group of parallel planar beam splitter array has the same shape and the same dimension; they are placed in parallel along an axis with same orientation and equal interval between them; adjust the interval between adjacent parallel planar beam splitters in the second group, meanwhile increase the reflectivity of each beam splitter along the propagation direction of light so that after the reflection of the second group of parallel planar beam splitter array the line shaped parallel laser beam emitted from the first group of beam splitters turns into an evenly and continuously distributed wide parallel laser beam.

Wherein, each beam splitter in the first and the second groups of parallel planar beam splitter array is coated over the whole beam splitter or part of the beam splitter with a broad band reflective thin film that reflects all the three primary color laser beams or a narrow band reflective thin film that reflect only one of the three primary color laser beams so that on the cross section of the wide parallel laser beam emitted from the second groups of parallel planar beam splitter array the three primary color laser beams appear alternatively along row direction, or column direction or both row and column directions; all the incidence surfaces and exit surfaces of the first and second groups of parallel planar beam splitter array are optical polished and coated with a broad band transmission thin film.

Wherein, the amplitude-phase-modulator-array consists of three sets of sub-amplitude-phase-modulator-arrays, a cubic beam splitter with three incidence surfaces and one exit surface and an optical lens; the optical lens is placed in front of the exit surface of cubic beam splitter with its optical axis coincides with central axis of the exit surface of cubic beam splitter; three sets of sub-amplitude-phase-modulator-arrays are respectively placed in front of the three incidence surfaces of cubic beam splitter with their optic axes coincide respectively with those of three incidence surfaces of cubic beam splitter.

Wherein, the cubic beam splitter is made up of four rectangular prisms which are glued together along their right angle surfaces; the right angle surfaces of rectangular prisms are coated with narrow band reflective films for one of three primary colors so that three primary color lights which are incident respectively from three incidence surfaces will exit from the exit surface via reflection or transmission; all the incidence surfaces and the exit surface are coated with broad band transmission films; the pixels of three sets of sub-amplitude-phase-modulator-arrays are aligned with each other so that after projection by the optical lens their images overlap on the image plane.

Compared with existing techniques, especially with the patent with an application number of 200810046861.8, the present invention has following advantages:

Firstly, since a strategy of different primary color laser beams illuminate different sub-divisions has been adopted, energy efficiency might increase by three times. Secondly, since holographic or binary optical elements are used, the system stability is improved and the structure is simplified. Thirdly, since gray scale liquid crystal panels, pure phase modulation liquid crystal panels with zero twist angle and integrated-amplitude-phase-modulators are utilized, the system stability is further improved and the structure is further simplified, and the manufacturing cost and assembling difficulty is reduced as well.

BRIEF DESCRIPTION OF THE DRAWINGS

Fig.1 is a schematic diagram of an embodiment of present invention using an integrated-amplitude-phase-modulator-array and transmission holographic optical elements.

Fig.2a and 2b is a schematic diagram of the arrangements of three primary color laser beams when the strategy of different primary color laser beams illuminate different sub-divisions is adopted.

Fig.3 is a schematic diagram of the structure of an illuminating optic system employing two perpendicularly placed groups of parallel planar beam splitter array.

Fig.4 is a schematic diagram of the arrangement of liquid crystal molecules in an integrated-amplitude-phase-modulator.

Fig.5 is a schematic diagram of the arrangement of liquid crystal molecules in a reflective pure-phase-modulation liquid crystal panel.

Fig.6 is a schematic diagram of the coordinate system adopted in explanation of the principle of fabrication and focusing of holographic optical elements.

Fig.7a-d is respectively principle diagram of fabrication and focusing of transmission and reflective holographic optical elements.

Fig.8 is a schematic diagram of the microstructure on the surface of a binary optical element.

Fig.9 is a schematic diagram of the structure of a coherent-secondary-light-source-generator when reflective or transmission microlenses with oblique optic axes are employed.

Fig.10 is a principle diagram of the way to adjust the spatial luminescence characteristic of a coherent secondary light source array.

Fig.11 is a schematic diagram of an embodiment of the present invention using transmission pure-phase-modulation liquid crystal panels and binary optical elements for projection type color 3D display.

Fig.12 is a schematic diagram of an embodiment of the present invention using reflective pure-phase-modulation liquid crystal panels and an array of reflective microlenses with oblique optic axes for projection type color 3D display.

Fig.13 is a schematic diagram of an embodiment of the present invention using pure-phase-modulation liquid crystal valves and an array of transmission microlenses with oblique optic axes for projection type color 3D display.

Fig.14 is a schematic diagram of an embodiment of the present invention using integrated-amplitude-phase-modulator-arrays and reflective holographic optical elements for projection type color 3D display.

DETAILED DESCRIPTION OF THE DRAWINGS

The terms used in the present invention are explained below.

1. Amplitude-phase-modulator-array: which carry out point by point amplitude and phase modulation for incident light, acting like spatial light modulators (SLMs). Usually one SLM is capable of performing either amplitude or phase modulation. The amplitude-phase-modulator-array in the present invention is equal to a combination of two SLMs, one is mainly used for amplitude modulation while another is mainly used for phase modulation. Their pixels are aligned with each other. Accordingly one amplitude-phase-modulator in the amplitude-phase-modulator-array is equal to one couple of aligned pixels of the two SLMs.

2. Liquid crystal panels: in the present invention liquid crystal panel means liquid crystal SLM. Like conventional twisted nematic liquid crystal screens, it contains quantities of pixels but performs mainly amplitude or phase modulation.

3. Randomly located secondary light sources: which refers to secondary light sources whose positions could be anywhere within a certain area, or they have the same possibility to lie at any position within the area. In contrast periodically located secondary light sources can only lie at regular grids.

The present invention is an improvement or further development of the Chinese patent entitled "A method and devices for 3-D display based on random constructive interference" (Application number: 200810046861.8). The principle of 3D display based on random constructive interference relies on two facts (Note: here "random" refers for short to randomly located secondary light sources). Firstly, according to optical interference principle, a voxel could be generated at any preset position via constructive interference of light rays coming from a number of coherent secondary light sources. Quantities of voxels may form a discrete 3D image in the air. Secondly, if the positions of all the coherent secondary light sources are randomly arranged, multiple images due to high order diffraction could be eliminated. As a result only one high quality 3D image is obtained.

A 3D display device proposed by the present invention which is based on random constructive interference could be divided into four modules. The function of each module is explained as follows:

Firstly, laser light source: the 3D display device based on random constructive interference is a coherent imaging system. Therefore the employed lasers should have a long coherent length. In addition, laser light sources which are capable to emit three primary color lights are needed for color display. The three primary color lights could be emitted by a single laser or by three independent lasers. The present invention does not distinguish whether the primary color lights come from a single laser or not. Instead, the entire light source is referred to by "a coherent light source of three primary colors."

Secondly, illuminating optic system: which is used for expanding laser beams. It transforms the thin laser beam emitted from above coherent light source of three primary colors into wide evenly distributed beams with each primary color laser beam separated from each other. Conventional incoherent planar screens such as the commercial liquid crystal screens use light source with broad spectrum. Since there is no need for phase control, divergent white light sources are used to increase viewing angle. In addition, a pixel in a conventional liquid crystal panel consists of three sub-pixels. Each sub-pixel is covered with a color filter, which transmits one of the three primary color lights. Since the white light source illuminates the whole screen, 2/3 light energy is blocked off. The illuminating optic system in above incoherent imaging systems is not suitable for the coherent imaging devices of the present invention. In the present invention, the phase of optical wave should be controlled precisely to ensure constructive interference. For the purpose wide parallel laser beams of three primary colors are used. In addition, to increase energy efficiency, the whole screen is divided into a number of sub-divisions, which is illuminated alternatively by three primary color laser beams. Since all the pixels within each sub-division are illuminated by a single color laser beam, the color filters could be omitted. As a result the energy efficiency increases by three times due to simplified structure. Above strategy of different primary colors for different sub-divisions is guaranteed by following two facts. Firstly, different sub-divisions of the screen appear now as different primary colors. So it is no longer suitable for conventional 2D color display. However in the present invention the 3D images are away from the screen. Since a voxel is created by light rays coming from a number of sub-divisions, it still can be any color. Secondly, different primary color laser beams now illuminate different sub-divisions. Usually the three primary color laser beams appear alternately along row direction or column direction, or both row and column directions. As a result, coherent secondary light sources of one primary color are allowed in one group of sub-divisions, but forbidden in other groups of sub-divisions. Strictly speaking, the above mentioned requirement for "random constructive interference" that a secondary light source should have the same possibility to lie randomly over the whole screen is not fulfilled. However we should notice that diffraction is in inverse proportion to the period. Since each subdivision contains many secondary light sources, even if the secondary light sources within different sub-division have identical random distribution, the high order diffraction is negligible because the repeat period of the sub-divisions is very large. Not to say that positions of the secondary light sources within different sub-divisions could adopt different random distributions. To illuminate different sub-divisions with different primary color laser beams, the present invention designed an illuminating optic system consisting of two perpendicularly placed groups of beam splitters. To separate each primary color the beam splitters are coated with different narrow-band reflective thin films. To ensure even illuminating intensity over the whole screen, along the propagation direction of light the reflectivity of the coated reflective thin film on a beam splitter increases progressively to compensate for accompanied energy decrease.

Thirdly, amplitude-phase-modulator-array: to carry out above mentioned random constructive interference, a large array of coherent secondary light sources should be constructed. To ensure constructive interference the amplitude and phase of each coherent secondary light source should be adjusted from time to time. Since one coherent secondary light source needs one amplitude-phase-modulator, hundreds and thousands of amplitude-phase-modulators should be constructed, which form a large two-dimensional amplitude-phase-modulator-array. Liquid crystal panels could be used for amplitude and phase modulation, with their pixels acting as amplitude-phase-modulators. For conventional liquid crystal panel, its modulations for amplitude and phase are correlated. To achieve independent modulation of both amplitude and phase we have to employ two panels, with one set in amplitude-mostly mode and another in phase-mostly mode by rotating the polarizer covering the panels, meanwhile combine the two panels in way of adding or multiplying with their pixel accurately aligned with each other. The present invention designed dedicated liquid crystal panels for 3D display based on random constructive interference. Considering above illuminating strategy, in the design the color filters of color liquid crystal display are taken away. In other words, the color liquid crystal panels turn into gray scale ones. Meanwhile orientations of the oriented films on opposite plates beside the liquid crystal layer are parallelly arranged. That means the twist angle of the liquid crystal molecular is zero. When a linearly polarized light beam penetrates the panel its polarization direction will not change. So only the phase changes while intensity remains the same. Put in other words, the liquid crystal panel works now in pure phase modulation mode. To achieve a phase modulation range of $0\sim2\pi$ the thickness of liquid crystal layer and the birefraction index difference of liquid crystal material should also be properly chosen. Next such a pure phase modulation liquid crystal panel could be integrated with a liquid crystal panel working in amplitude-mostly mode. During integration the polarizer between the two adjacent panels and one of the two middle plates could be omitted. As a result better stability is obtained due to simplified structure. It also reduces the difficulty for later assembling. This is because during lithography of the plates the pixels are aligned accurately with each other.

Fourthly, coherent-secondary-light-source-generator-array: since the parallel illuminating laser beams remain parallel after passing the amplitude-phase-modulator-array--although they are divided into independent-sub-light-beams, they could hardly meet over a large volume to perform constructive interference. In addition the independent-sub-light-beams are periodically arranged, which might cause serious high order diffraction. A coherent-secondary-light-source-generator-array plays two functions. One function is to focus each independent-sub-light-beam into a point secondary light source. As a result light rays emitted from each secondary light source form a light cone. The cone angles and orientations could be adjusted by moving the positions of secondary light sources so that they point to and meet at the same 3D imaging volume. Another function is to shift the position of each secondary light source to a random position to eliminate multiple images due to high order diffraction. These functions of a coherent-secondary-light-source-generator make it looks like a microprim combined with a microlens whose optic axis is in parallel with the independent-sub-light-beam, or a single microlens with oblique optic axis. The microlens focuses the independent-sub-light-beam into a light cone. To make full use of incident light energy, the incidence pupil of the microlens should have the same dimension as that of the independent-sub-light-beam. Since a microlens is aligned with an amplitude-phase-modulator, or aligned with a pixel of a liquid crystal panel, the microlenses have the same two-dimensional periodical arrangement of the pixels of the liquid crystal panel. If the optic axes of the microlenses are in parallel with the independent-sub-light-beams, the focused secondary light sources have the same periodical arrangement with the pixels of the liquid crystal panel. In this case a microprim is needed to deflect the focused secondary light source onto a new position. Different microprisms should have different vertex angles to produce different deflection angles, so that the deflected secondary light sources are randomly distributed. On the other hand, if the optic axes of the microlenses are inclined randomly with the independent-sub-light-beams, the focused secondary light sources would be in a random distribution. As said above a 3D display device based on random constructive interference is a coherent imaging system. There are only three primary color laser lights. According to this characteristic, holographic optical elements or binary optical elements could be utilized in the present invention as coherent-secondary-light-source-generator-array. Both holographic optical elements and binary optical elements have been intensively studied for a long time. They are capable of integrating several conventional optical elements into one single element. For example, they could integrate above microlens and microprism into a single element, which could be fabricated on a large scale by thermal pressing, filling, rolling or copy, etc. The integrated elements could simplify the system structure, bring more stability as well as lower cost.

Detailed description of the drawings will be given below to explain in detail the principle of the present invention.

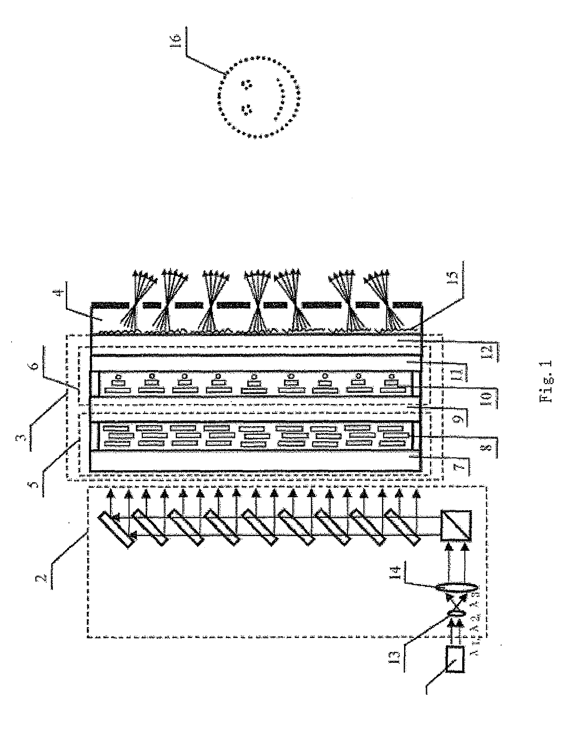

Fig.1 is a schematic diagram of a 3D display device constructed using integrated-amplitude-phase-modulator and transmission holographic optical elements. It consists of a polarized coherent light source 1, an illuminating optic system 2, an amplitude-phase-modulator-array 3 and a coherent-secondary-light-source-generator-array 4. The structures and functions of above four modules are explained as follows.

As illustrated in Fig.1, the coherent light source 1 emits a laser beam of three primary colors with wavelength $\lambda_1$, $\lambda_2$ and $\lambda_3$ for color 3D display. Since liquid crystal panels are employed for amplitude and phase modulation, the coherent light source 1 emits polarized laser beam so that its energy could be fully utilized. If the laser beam emitted by the coherent light source 1 is not polarized, a polarizer should be used to turn it into linearly polarized light at the cost of half of the energy loss.

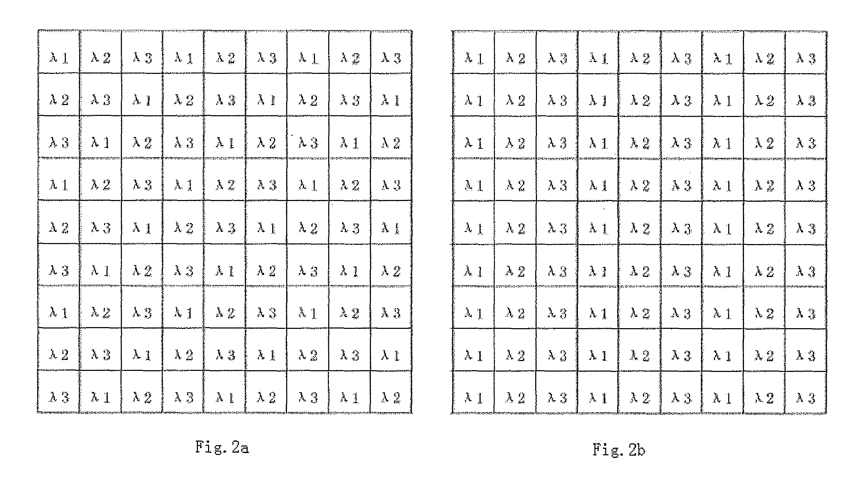

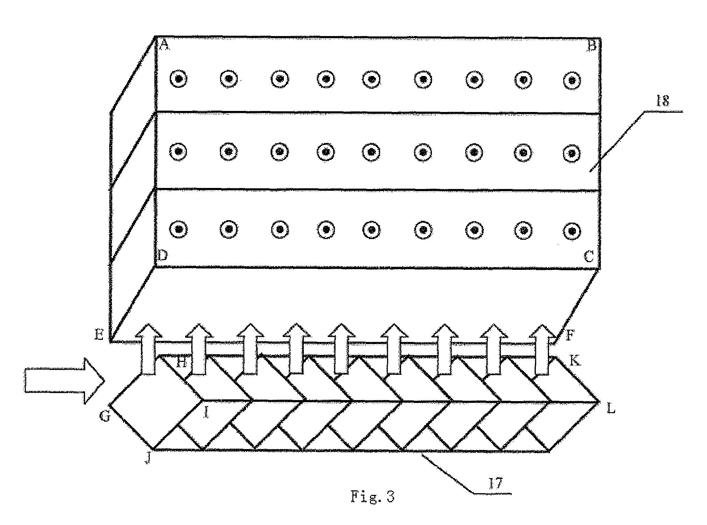

The illuminating optic system 2 in Fig. 1 transforms the thin laser beam emitted by the coherent light source 1 into wide evenly distributed parallel laser beams. To achieve high energy efficiency, different primary color laser beams illuminate different sub-divisions as illustrated in Fig.2. Each grid in Fig.2 represents a sub-division. The three primary color laser beams with wavelength $\lambda_1$, $\lambda_2$ and $\lambda_3$ illuminate the grid alternatively along the column direction in Fig.2b, or alternatively along both row and column directions in Fig.2a. To arrange the three primary color laser beams in a way as indicated in Fig.2, the illuminating optic system 2 employed two perpendicularly placed groups of parallel planar beam splitters as illustrated in Fig.3. Each parallel planar beam splitter in the first group 17 is square shaped. They are placed in parallel along the horizontal axis with the same orientation and equal interval between them. They receive the thin laser beam emitted from polarized coherent light source 1 at an incident angle of 45 degree. Adjust the interval between adjacent parallel planar beam splitters in the first group 17, meanwhile along the propagation direction of light increase the reflectivity of each beam splitter in turn, so that after the reflection of the first group 17 of beam splitters the incident thin laser beam turns into an evenly and continuously distributed line shaped parallel laser beam. On the condition that the material adsorption loss is negligible, the reflectivity of one beam splitter should be set as the reflectivity divided by the transmissibility of the previous parallel planar beam splitter. In this way the light energy reflected by each beam splitter is the same. What is more, if the interval between adjacent parallel planar beam splitters in the first group 17 is too large, there will be a gap between reflected beams. On the other hand, if the interval is too small, the reflected light beam will overlap. In both cases the light energy becomes unevenly distributed. Similarly every parallel planar beam splitter in the second group 18 is rectangular shaped. They are placed in parallel along the vertical axis with the same orientation and equal interval between them. They receive the line shaped laser beam emitted from the first group 17 of beam splitter at an incident angle of 45 degree. For the same reason, adjust the interval between adjacent parallel planar beam splitters in the second group 18, meanwhile increase the reflectivity of each beam splitter along the propagation direction of light in turn, so that after the reflection of the second group 18 of beam splitters the incident line shaped parallel laser beam turns into an evenly and continuously distributed wide parallel laser beam. Further more to obtain the three primary color laser beams arranged in a way as indicated in Fig.2, each beam splitter in the first group 17 and second group 18 should be coated over the whole beam splitter or part of the beam splitter with a broad band reflective thin film that reflects all the three primary color lights or a narrow band reflective thin film that reflect only one of the three primary color lights. For example, the nine beam splitters in the first group 17 could be coated with a narrow band reflective thin film reflecting alternatively red, green and blue color laser beams. Meanwhile, all the three beam splitters in the second group 18 could be coated with a broad band reflective thin film reflecting all the three primary color laser beams. As a result, after the transformation of the second group 18 of beam splitters, the final evenly and continuously distributed wide parallel laser beam will break into nine columns, each column appears alternatively as one of the three primary colors as indicated in Fig.2b. In another case, all the nine beam splitters in the first group 17 could be coated with a broad band reflective thin film that reflects all the three primary color lights. Meanwhile, all the three beam splitters in the second group 18 could be divided into three rows and nine columns, yielding a total of 27 small grids. Each grid could be coated with a narrow band reflective thin film reflecting one of the three primary color lights alternatively along both row and column directions. As a result, after the reflection of the second group 18 of beam splitters, the final evenly and continuously distributed wide parallel laser beam will break into nine rows and nine columns, yielding a total of 81 grids. Along each row and each column the grids appear alternatively as one of the three primary color lights as indicated in Fig.2a. Usually each grid covers many pixels on the liquid crystal panel, such as $100\times100$ pixels. Even if the positions of the secondary light sources generated by the coherent-secondary-light-source-generator-array have the same random distribution in different grids, the high order diffraction caused by it is negligible because the period of the grid is very large. Actually the positions of the secondary light sources could adopt different random distributions in different grids, which further depress the high order diffraction. To reduce weight, thin plate beam splitters could be used to construct the first and second beam splitter groups 17 and 18. Of course the interval between adjacent beam splitters should remain the same. Or the beam splitters could be made with polymethyl methacrylate, so that the weight is reduced while enough mechanical strength is maintained. In addition all the incidence and exit surfaces of both beam splitter groups 17 and 18 such as the incidence surface GHIJ and exit surface HKLI of the first group 17 and the incidence surface DCFE and exit surface ABCD of the second beam splitter group 18 in Fig.3 should be coated with broad band transmission thin films to reduce light energy loss. In addition, such auxiliary elements as spatial filter and rectangle prism could also be employed to improve the optical and mechanical performance of the illuminating optic system 2. For example, optical lens 13 and 14 are used in Fig.1, which make up a telescope that pre-expands the thin laser beam emitted from the coherent light source to match with the size of the incidence surface of the first beam splitter group 17 in Fig.3. Furthermore, a pin hole could also be added at the common focus of lens 13 and 14 as spatial filter, which block out possible high order modes of the laser beam.

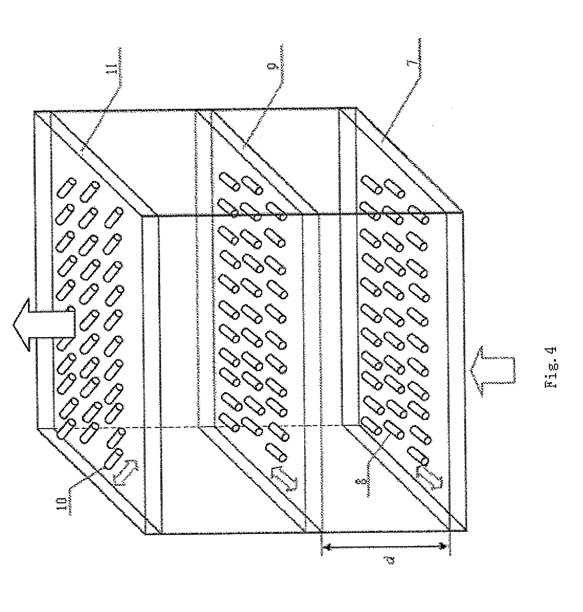

As illustrated in Fig.1, an integrated liquid crystal panel is employed as amplitude-phase-modulator-array 1. It is an integration of the rear plate 7, the first liquid crystal layer 8, the middle plate 9, the second liquid crystal layer 10, the front plate 11 and the polarizer 12 glued on the front plate. The rear plate 7, the first liquid layer 8 and the middle plate 9 make up the first gray scale liquid crystal panel 5. The middle plate 9, the second liquid crystal layer 10, the front plate 11 and the polarizer 12 make up the second gray scale liquid crystal panel 6. The pixels of both the first gray scale liquid crystal panel 5 and the second gray scale liquid crystal panel 6 are aligned with each other. They possess the same two-dimensional periodic arrangement. The first gray scale liquid crystal panel 5 is used for phase modulation, while the second liquid crystal panel 6 is used for amplitude modulation. As illustrated in Fig.4, in both gray scale liquid crystal panel 5 and 6, the orientations of the oriented films on each plate are indicated by the arrows on the lower left corners of rear plate 7, middle plate 9 and front plate 11 respectively. Wherein the orientations of the oriented films of the first gray scale liquid crystal panel 5 on rear plate 7 and middle plate 9 are the same. It means that the twist angle of liquid crystal molecules is zero. Such kind of liquid crystal panels, whether reflective or transmission, may carry out pure phase modulation. The reasons are given below.

Many liquid crystal displays or liquid crystal spatial light modulators use nematic liquid crystal. To analyze the guidance of the liquid crystal to the light, the whole liquid crystal layer could be divided into many thin slices. The orientations of the molecules within each thin slice are nearly the same. Near the oriented film the orientations of the liquid crystal molecules tend to adopt the orientation of the oriented film. Within the first gray scale liquid crystal panel 5, since the orientations of the oriented films on rear plate 7 and middle plate 9 are the same, the orientations of all the liquid crystal molecules within all slices tend to adopt the same orientation of the oriented films. When a linearly polarized parallel illuminating laser beam incidents from beneath the rear plate 7, its polarization direction will not change if it is polarized along the same direction of the liquid crystal molecules. Therefore its phase changes while the amplitude keeps the same. When a voltage is applied between rear plate 7 and middle plate 9, the liquid crystal molecules tend to turn to the direction of applied electronic field. As the applied voltage increases, the liquid molecules will transform from a status of lying flat to a status of standing strait progressively, but their projections on rear plate 7 and middle plate 9 are still along the orientation of the oriented films. Accordingly the phase modulation of gray scale liquid crystal panel 5 to incident light beam decreases step by step. In a word, gray scale liquid crystal panel 5 is an idea pure phase modulator. Suppose the interval between the two plates is d, the ordinary and extraordinary refraction indexes of liquid crystal are no and $n_e$ respectively, for incident light with wavelength $\lambda$ the maximum phase modulation of a transmission liquid crystal panel is,

$$\beta_{max} = \frac{2\pi d}{\lambda}(n_e - n_o) \tag{1}$$

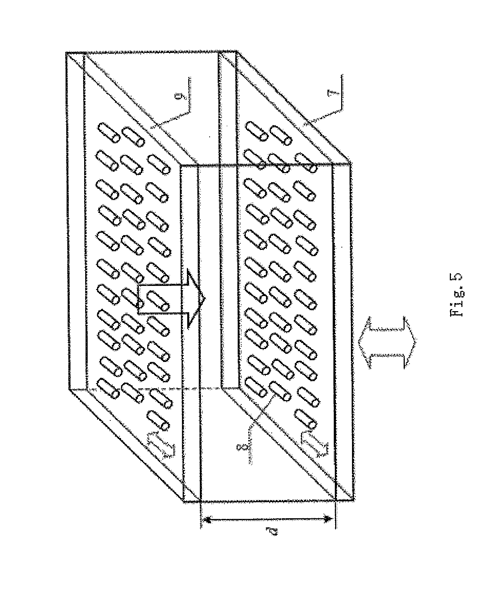

In a reflective liquid crystal panel, like liquid crystal on silicon (LCOS) or liquid crystal light valve, the oriented films could also adopt the same orientation as illustrated in Fig.5. So the twist angle of the liquid crystal molecules is zero. After reflection a linearly polarized parallel incident laser beam will not change its polarization direction if it is polarized along the same direction of the molecules. In this case the reflective liquid crystal panel is working in pure phase modulation mode. Since the light passes the liquid crystal layer twice, the maximum phase modulation is twice as that described by Fq.1.

For 3D display based on random constructive interference, the phase of each secondary light source should be modulated in a range of 0~2π. So for the first gray scale liquid crystal panel 5, the interval $d$ between the rear plate 7 and middle plate 9, the birefacrction index difference $n_o$-$n_e$ of the first liquid crystal layer 8 should be properly chosen so that the phase modulation range of the first gray scale liquid crystal panel 5 could reach 0~2π.

In Fig.1, for the second gray scale liquid crystal panel 6, the orientation of the oriented films on the middle plate 9 and front plate 11 as well as the polarization direction of the polarizer 12 should be chosen properly to set the second gray scale liquid crystal panel 6 in amplitude-mostly mode. Usually the orientation of the oriented film on the middle plate 9 should be perpendicular to that on front plate 11. From the middle plate 9 to the front plate 11, the molecules within each thin slice turn gradually from the initial orientation along the orientation of the oriented film on middle plate 9 to the final orientation along the orientation of the oriented film on the front plate 11. The orientations of the liquid molecules from the middle plate 9 to the front plate 11 change over 90 degree. So the twist angle of liquid crystal molecules is 90 degree. Accordingly the polarization direction of a linearly polarized incident light of the second gray scale liquid crystal panel 6 will also be led by the liquid crystal molecules and change over 90 degree. As the applied voltage between middle plate 9 and front plate 11 increases, the liquid molecules will transform from a status of lying flat to a status of standing strait gradually. As a result its guidance to incident light will decrease gradually. The polarization direction of incident light could not change over 90 degree. Therefore part of light is blocked by polarizer 12. In other words, the amplitude is modulated.

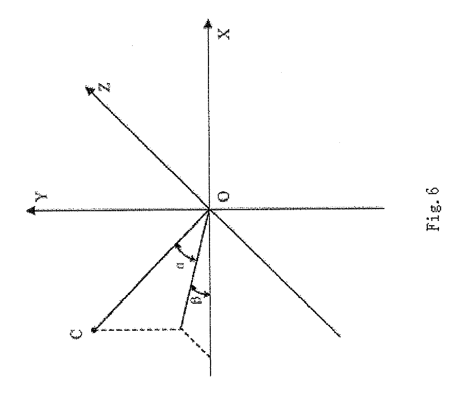

In Fig.1 a transmission holographic optical element array is used as the coherent-secondary-light-source-gerlerator-array 4. A holographic optical element is actually a hologram. It could be made by recording the interference patterns of two point light sources (A parallel laser beam could be regarded as a point light source that sits at infinite). We may name these two points as reference point light source R and object point light source O. After development a holographic optical element may function like an optical lens to project an object point into an image point. Here we mentioned four points. The former two points appear in fabrication of the holographic optical element, while the latter two points appear in usage. So they are totally different. To distinguish them we name the latter two points respectively as reconstruction object point C and reconstruction image point I. In the coordinate system as illustrated in Fig.6, suppose the holographic plate is placed on YZ plane with its center at the origin of the coordinates. Connect the above four points with the origin and project the lines onto the XZ plane. Denote the distances of above four point to the origin as $R_O$, $R_R$, $R_C$ and $R_I$ respectively, the angles between the above connected lines and their projected lines as $\alpha_O$, $\alpha_R$, $\alpha_C$ and $\alpha_I$ respectively, and the angles between their projected lines with XY plane as $\beta_O$, $\beta_R$, $\beta_C$ and $\beta_I$ respectively. Here the subscripts O, R, C, I respectively stand for the object point light source O, the reference point light source R in fabrication, and reconstruction object point C and reconstruction image point I in usage. When the light emitted from reconstruction object point C passes a holographic optical element, its direction and the position of reconstruction image point I could be determined from following equations,

$$\frac{1}{R_I} - \frac{1}{R_C} = \pm\frac{\mu}{m^2}(\frac{1}{R_O} - \frac{1}{R_R}) \qquad (2)$$

$$\sin\alpha_I = \sin\alpha_C \pm \frac{\mu}{m^2}(\sin\alpha_O - \sin\alpha_R) \qquad (3)$$

$$\cos\alpha_I \sin\beta_I = \cos\alpha_C \sin\beta_C \pm \frac{\mu}{m^2}(\cos\alpha_O \sin\beta_O - \cos\alpha_R \sin\beta_R) \qquad (4)$$

In Eq.2-4, $\mu = \lambda_c/\lambda_O$ is the ratio of the wavelength $\lambda_c$ during usage to the wavelength $\lambda_O$ during recording, m is proportional constant for the changing of the period of interference patterns before and after chemical development. The sign on the right hand side of Eq.(2-4) should be positive for virtual images and negative for real images. Since the parameters of a developed holographic optical element on the right hand side of Eq. 2 are fixed, its focal length is determined by

$$\frac{1}{f} = \frac{\mu}{m^2}(\frac{1}{R_O} - \frac{1}{R_R}) \qquad (5)$$

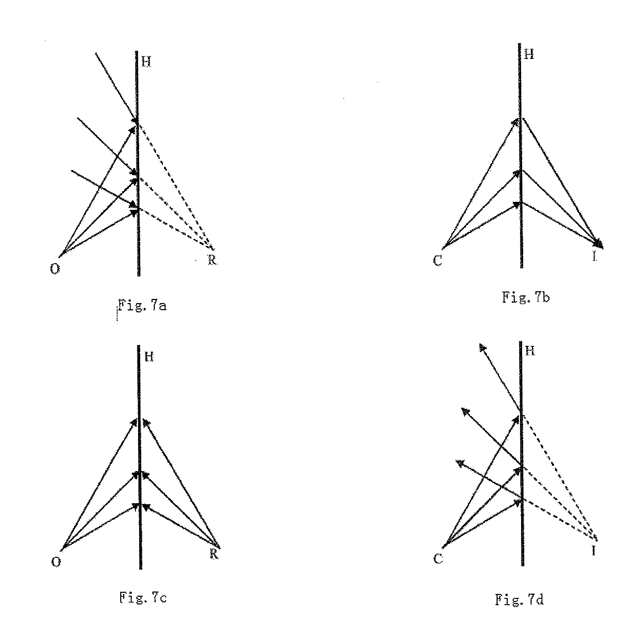

Using Eq.2-4 the position of the reconstruction image point I of a reconstruction object point C could easily be calculated. Fig.7 provided two examples of the fabrication and using of holographic optical elements. Holographic optical elements could be classified as transmission holographic optical elements and reflective holographic optical elements. The differences between fabrication of transmission holographic optical elements and that of reflective ones are the relative positions of reference point light source and object point light source during recording. If both reference point light source and object point light source lie at the same side of a holographic plate H, a transmission holographic optical element is made. In a transmission holographic optical element the interference patterns are in parallel with the holographic plate. If reference point light source and object point light source lie at different sides of a holographic plate H, a reflective holographic optical element is made. In a reflective holographic optical element the interference patterns are perpendicular to the holographic plate. Usually reflective holographic optical elements appear as thick hologram. A thick hologram produces only one diffraction image. So its diffraction efficiency could reach 100%. In contrast, a thin hologram produces many high order diffractions. The diffraction efficiency of each order is low. To obtain high energy efficiency, if possible, thick hologram should be employed for the present invention. Thick hologram refers to a hologram in which the thickness of the recording media is larger than the interval between interference patterns. Fig.7b and 7d illustrates how a holographic optical element projects a reconstruction object point C into a reconstruction image point I. Compare Fig.7a with 7b, 7c with 7d, one can see that if the object point O during recording is at the same position as the reconstruction object point C during usage, the reconstruction image point I during usage will appear at the same position as the reference point R during recording. Therefore to arrange the point light source focused by holographic optical element, that is the reconstruction image point I in a random distribution, the position of reference point R during recording in the present invention should be randomly chosen.

In Fig.1 the exit surface of holographic optical element array 4 is covered with a blocking film bearing many transparent micro-holes. Its function is to block the possible high order diffraction produced by holographic optical elements and reduce the background noise for displayed 3D images.

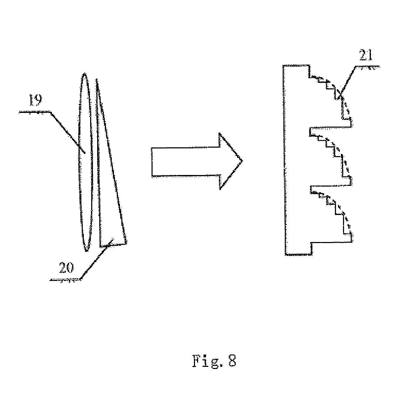

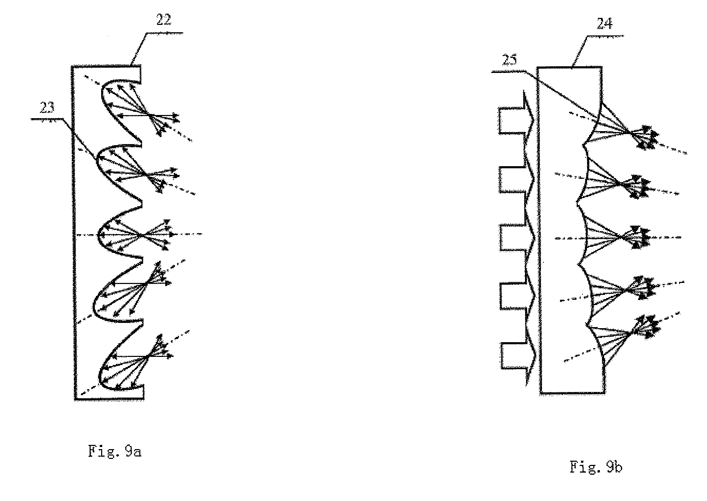

Besides holographic optical elements, binary optical elements or micro-lens with oblique optic axis could also be used to construct coherent-secondary-light-source-array. Fig.8 and Fig.9 provide two examples.

Fig.8 illustrates a way to form the microstructure on the surface of a binary optical element. For a binary optical element 21 playing the functions of a microlens 19 and microprism 20, its design may be divided into two steps. The first step is to reduce the thickness. When a wavefront penetrates a microlens 19 and microprism 20, its phase will change according to the optic path length. Since different part of the microlens 19 and microprism 20 has different thickness, the wavefront will change its shape and create an effect of focusing and deflection. However multiple of $2\pi$

phase change could be discarded. Based on this principle the thickness of a microlens 19 and microprism 20 could be reduced until the phase change it generates fall within $2\pi$. The second step is to make binary approximation. The surface of resulting thin microlens and microprism is smooth but broken into many parts as indicated by the dashed line on the right side of Fig.8. Since the smooth surface is hard to fabricate, it has to be decomposed into many binary stairs. For example it can be approximated with a total of 16 stairs. As the number of stairs increases it gets closer to the smooth surface but harder to fabricate. These stairs could be formed by multiple exposures and lithographs--the same techniques used to fabricate large scale integrated circuits. When a binary optical element is employed for coherent-secondary-light-so-arce-generator, the vertex angle of the microprism could be randomly chosen so that the positions of the coherent secondary light sources it generates are of a random distribution.

In Fig.9 an array of microlenses with oblique optic axes are used as coherent-secondary-light-source-generator-array. The optic axis of each reflective microlens 23 which is indicated by point dashed line in Fig.9a and the optic axis of each transmission microlens 25 which is indicated by point dashed line in Fig.9b are deflected to random directions, so that the positions of the coherent secondary light sources generated by reflective microlens array 22 or transmission microlens array 24 are of a random distribution. It is worth to notice that the parameters of each coherent-secondary-light-source-generator are randomly chosen during the fabrication of a coherent-secondary-light-source-generator-array, so that the positions of the coherent secondary light sources it produces are of a random distribution. Once the fabrication is accomplished, the internal structure of a coherent-secondary-light-source-generator-array will change no more. Accordingly the positions of the coherent secondary light sources it produces will also change no more. So in the present invent the word "random" means random distribution over space but not random change with time.

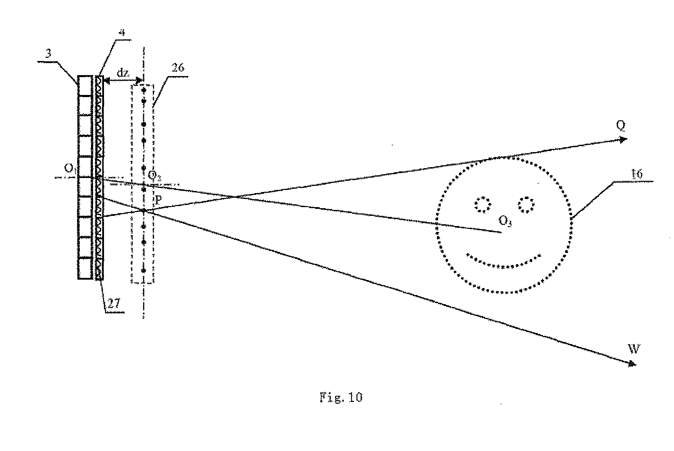

In theory, once secondary light sources with random distribution are generated, single 3D images could be created via constructive interference of light rays emitted by these secondary light sources. In practice the spatial luminescence characteristics of each secondary light source should still be carefully designed so that the light cone it produces could point to the same volume. If the light cones do not overlap, constructive interference will not take place. Then 3D images can not be created. As illustrated in Fig.10, we can shift the positions of focused coherent secondary light sources 26 by changing the parameters of each coherent-secondary-light-source-generator 27 in the coherent-secondary-light-source-generator-array 4. The spatial luminescence characteristics will be improved accordingly, so that the light cones may point to the same imaging volume. During the process the position of each coherent-secondary-light-source-generator 27 in the coherent-secondary-light-source-generator-array 4 remain fixed because it has to be aligned with each amplitude-phase-modulator in the amplitude-phase-modulator-array 3. Take the focused secondary point light source P in Fig.10 for an example. It emits a light cone QPW with P as cone-point. Moving secondary light source P up or down, the light cone would also turn upward and downward. Increasing the vertical distance dz of P to the coherent-secondary-light-source-generator-array 4, the cone angle of QPW will decrease. The light energy will be distributed in a smaller volume, which is not beneficial to form a large 3D image. In a word, the spatial luminescence characteristic of a secondary light source P could be adjusted by moving its position. Accordingly the light cone emitted by it could be adjusted to point to the same 3D imaging volume. However if the position of each secondary light source is readjusted individually, the overall random distribution might get destroyed. So it is preferable to adjust the positions of all the secondary light sources 26 as a whole. Suppose in initial design stage the positions of the secondary light sources 26 focused by coherent-secondary-light-source-generator-array 4 has been arranged at random positions and lying on a plane parallel to amplitude-phase-modulator-array 3. Denote the center of amplitude-phase-modulator-array 3 and the secondary light sources array 26 focused by coherent-secondary-light-source-generator-array 4 as $O_1$ and $O_2$ respectively. The 3D images are to be created in a volume around the center $O_3$. During the next design stage, firstly move the secondary light source array 26 as a whole so that the line connecting its center $O_2$ with the center $O_1$ of amplitude-phase-modulator-array 3 passes the center $O_3$ of the 3D imaging volume. Secondly, linearly squeeze or stretch the secondary light source array 26 as a whole along the parallel direction of the periodically arranged two-dimensional amplitude-phase-modulator-array 3 so that the light cones emitted by them point to the 3D imaging volume. Thirdly, move the secondary light source array 26 as a whole along the normal direction of amplitude-phase-modulator-array 3, that is, change dz, so that most of the cone angles are in a proper range to make the light cones emitted by the secondary light sources cover the entire 3D imaging volume. Finally, for a few of secondary light sources whose spatial luminescence characteristic are still not good enough, move their positions along the normal direction of amplitude-phase-modulator-array 3 so that the light cones emitted by them point to the 3D imaging volume. During all above readjustments, the vertical projections of the secondary light sources in the secondary light source array 26 on the plane on which amplitude-phase-modulator-array 3 lies are in a random distribution. As a result the high order diffractions will be greatly depressed. The movement of the positions of a few of secondary light sources along the normal direction of amplitude-phase-modulator-array 3 will not destroy the random distribution. Therefore multiple high order diffraction images will not be generated. Once the final positions of all the secondary light sources focused by coherent-secondary-light-source-generator-array 4 are determined, the parameters of each coherent-secondary-light-source-generator 27 could be derived.

When the spatial luminescence characteristics of secondary light sources are properly designed, the light cones emitted by them would meet at preset volume and interference will take place. Randomly pick a group of secondary light sources and modulate their phases by amplitude-phase-modulator. If the phases of the light rays emitted by them are the same or with a difference of multiple of $2\pi$ when the light rays arrive at a particular position in the air, constructive inference will happen, yielding a light spot or voxel at the position. The larger the number of secondary light sources joining the constructive interference the brighter the voxel. Many voxels with varying intensity could be created in a similar way, which creating in real time a discrete 3D image. The final amplitude and phase modulation of a secondary light source could be determined by complex summation of each complex amplitude it should make to produce each voxel. For more detailed calculation please refer to the Chinese patent with the application number: 200810046861.8. Base on above imaging principle, we can roughly estimate the available number of voxels. Suppose 8-bit 256-level gray scale liquid crystal panels with $1980{\times}1024$ pixels are used for 3D display and the cross section of the 3D imaging volume measures $400{\times}400mm^2$. Accordingly the light cone emitted by each secondary light source should cover an area of $S_1=400{\times}400mm^2$. If the size of a voxel measures as $S_2=1{\times}1mm^2$, the contribution of one pixel with unit intensity to the voxel intensity is $S_2/S_1=1/160000$. So a total of 400 pixels with unit intensity are needed to create a voxel with unit intensity. When the phases of these 400 pixels are properly adjusted so that constructive interference takes place at the voxel's position, the intensity of the voxel may reach $400^2{\times}S_2/S_1=1$. Please notice that the intensity is the square of the amplitude in above calculation. For the same reason, to create a voxel with an intensity of 256, a total of $400{\times}16=6400$ pixels with unit intensity are needed. To create a voxel with a middle intensity of 125 only 4472 pixels with unit intensity are needed. Suppose the average voxel intensity is 125. The pixels of above liquid crystal panels could be divided into $1980{\times}1024/4472=453$ groups. If all the pixels are of unit intensity, each group can generate a voxel with an intensity of 125. Then a total of 453 voxels could be created. If each group creates 256 voxels, a total of $453{\times}256$ voxels with an intensity of 125 could be produced. In this case the total amplitude of each pixel will be very large, but not exceed 256. This is because the total amplitude of each pixel is the complex summation of 256 complex amplitudes for the pixel to create the related 256 voxels, but the phases of 256 complex amplitudes are not always the same or always with a difference of multiple of $2\pi$. From above estimation we can draw the conclusion that at least $453{\times}256$ voxels with an intensity of 125 could be created using 8-bit 256 level gray scale liquid crystal panels with $1980{\times}1024$ pixels. Increasing the laser power may reduce the pixel number to create one voxel. Accordingly more voxels could be produced. In the present invention, since different primary color laser beams illuminate different sub-divisions, the energy efficiency could be improved by $2{\times}3=6$ times than that of conventional planar screens, which is quite beneficial to increase the brightness or the number of voxels of 3D images.

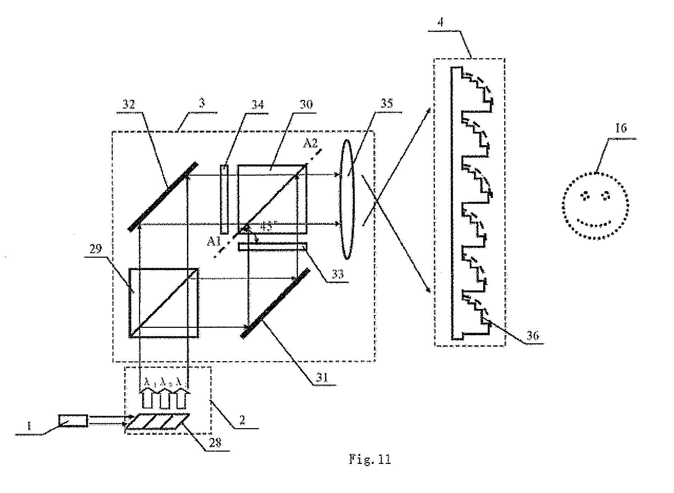

Above discussed illuminating optic system based on the strategy of different primary colors for different sub-divisions, liquid crystal panel for pure phase modulation, integrated-amplitude-phase-modulator, and secondary-light-source-generators using holographic optical element, or binary optical element, or microlens with oblique optic axis, all of them could be utilized not only to construct planar large size 3D screen, but also to build rear-projection or front-projection type color 3D imaging devices. Fig.11-14 provide four examples.

Fug.11 is a schematic diagram of a projection type color 3D display device employing transmission pure-phase-modulation liquid crystal panels and binary optical elements. It consists of a polarized coherent light source 1, an illuminating optic system 2, an amplitude-phase-modulator-array 3 and a coherent-secondary-light-source-generator-array 4. The coherent light source 1 emits three primary color lasers with wavelength $\lambda_1$, $\lambda_2$ and $\lambda_3$ for color 3D display. Illuminating optic system 2 consists of two perpendicularly placed groups of parallel planar beam splitters. For convenience only one group 28 is drawn in Fig.11. In Fig.11 the amplitude-phase-modulator-array 3 is made up of two transmission pure-phase-modulation liquid crystal panels 33, 34, two half-reflect-half-transmit prisms 29,30, two mirrors 31, 32 and a projection lens 35. Two half-reflect-half-transmit prisms 29,30 and two mirrors 31, 32 are disposed to form a Michelson interferometer. Two pure-phase-modulation liquid crystal panels 33, 34 are placed at the two arms of the Michelson interferometer. The first pure-phase-modulation liquid crystal panel 33 is placed at an angle of 45 degree with the second beam splitter 30's half-reflect-half-transmit surface A1-A2 and in mirror symmetry with the second pure-phase-modulation liquid crystal panel 34 relative to the second beam splitter 30's half-reflect-half-transmit surface A1-A2. Both pure-phase-modulation liquid crystal panels 33, 34 are within a distance from one focal length to two focal lengths from the projection lens 35. The thin laser beam of three primary colors emitted from coherent light source 1 is first expanded by the illuminating optic system 2 into a wide beam with each primary color separated from each other. Then it is split by the first half-reflect-half-transmit prism 29 into two beams, which are respectively reflected by two mirrors 31, 32, and then incident normally on the two transmission pure-phase-modulation liquid crystal panels 33 and 34 respectively (The polarization direction of the linearly polarized illuminating laser beams are in parallel with the orientations of the oriented films of pure-phase-modulation liquid crystal panels 33 and 34). After phase modulation, the beams pass the second half-reflect-half-transmit prism 30, and form two images by the projection lens 35. Since the pixels of pure-phase-modulation liquid crystal panels 33, 34 are accurately aligned with each other and within a distance from one focal length to two focal lengths from the projection lens 35. They will be projected as enlarged real images on the coherent-secondary-light-source-generator-array 4. The images of the pixels overlap exactly with each other, producing a coherent secondary light source array in way of complex addition. These coherent secondary light sources are located in periodic positions and their amplitudes and phases are adjustable. In fig.11, the coherent-secondary-light-source-generator-array 4 is made up of binary optical elements. Although the microstructure on the surface of each binary optical element 36 is different, their outside dimensions are the same. They are arranged in periodic positions and aligned with above periodic coherent secondary light source array, transforming the latter into coherent secondary light sources with random distribution. The light cones emitted from these randomly located secondary light sources meet at the imaging volume and form a discrete 3D image 16 via constructive interference.

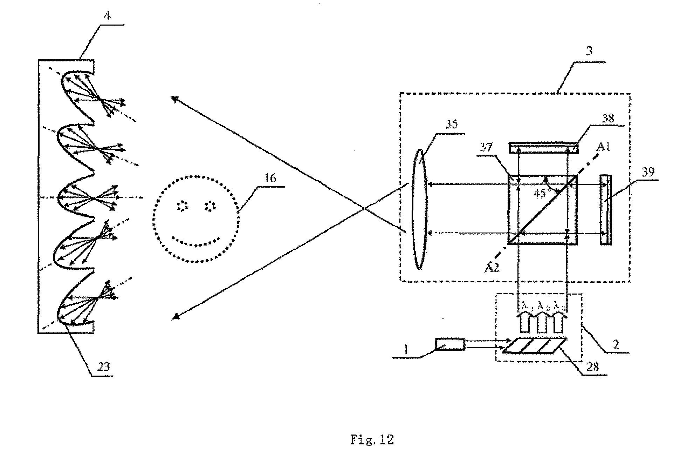

Fig.12 is a schematic diagram of a projection type color 3D display device using reflective pure-phase-modulation liquid crystal panels and an array of reflective microlenses with oblique optic axes. The illuminating optic system in Fig.12 is the same as that in Fig.11. The amplitude-phase-modulator-array 3 is now made up of a half-reflect-half-transmit prism 37, two reflective pure-phase-modulation liquid crystal on silicon (LCOS) panels 38, 39, and a projection lens 35. The orientations of the oriented films beside liquid crystal layer are the same within pure-phase-modulation LCOS panels 38, 39, and the polarization direction of the linearly polarized illuminating laser beams are in parallel with the orientations of oriented films. So the two LCOS panels 38, 39 work in pure phase modulation mode. The two pure-phase-modulation LCOS panels 38, 39, and the half-reflect-half-transmit prism 37 are disposed to form a Michelson interferometer. Two reflective pure-phase-modulation LCOS panels 38, 39 are used as the mirrors at the two arms of the Michelson interferometer. The first pure-phase-modulation LCOS panel 38 is placed at an angle of 45 degree with the beam splitter 37's half-reflect-half-transmit surface A1-A2 and in mirror symmetry with the second pure-phase-modulation LCOS panel 39 relative to beam splitter 37's half-reflect-half-transmit surface A1-A2. The linearly polarized thin laser beam of three primary colors emitted from coherent light source 1 is first expanded by the illuminating optic system 2 into a wide beam with every primary color separated from each other. Then it is split by the half-reflect-half-transmit prism 37 into two beams, which incident normally on the liquid crystal layers on the front surfaces of two pure-phase-modulation LCOS panels 38, 39. After reflection the beams pass the half-reflect-half-transmit prism 37 again and combine together. Then they are projected by the projection lens 35 to form two enlarged real images on coherent-secondary-light-source-generator-array 4. This is because two pure-phase-modulation LCOS panels 38, 39 are within a distance from one focal length to two focal lengths from the projection lens 35. Since the pixels of pure-phase-modulation LCOS panels 38, 39 are accurately aligned with each other, their images overlap exactly with each other, producing a coherent secondary light source array in way of complex addition. These coherent secondary light sources are located in periodic positions and their amplitudes and phases are adjustable. Next they are transformed into coherent secondary light sources with random distribution by coherent-secondary-light-source-generator-array 4, which is made up of reflective microlenses 23 with oblique optic axes.

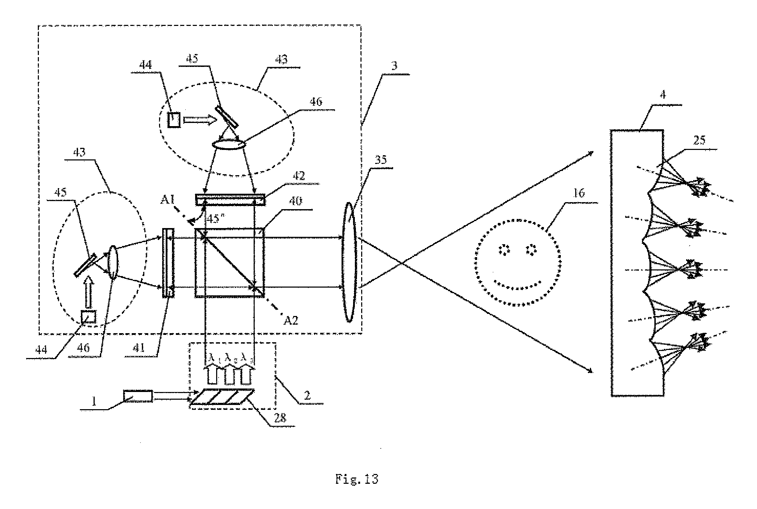

Fig.13 is a schematic diagram of a projection type color 3D display device using pure-phase-modulation liquid crystal light valves and an array of transmission microlenses with oblique optic axes. The device in Fig.13 is the same as that in Fir.12, except that pure-phase-modulation LCOS panels are replaced by pure-phase-modulation liquid crystal valves and reflective microlens with oblique optic axis in Fig.12 replaced by transmission microlens with oblique optic axis in Fig.13. Since there is no addressing circuit on a liquid crystal light valve, two digital light processors 43 are added in the device in Fig. 13. A digital light processor comprises a light source 44, a digital micro-mirror-device (DMD) 45 and an optic lens 46. The two digital light processors 43 project two images onto the back of liquid crystal light valves 41, 42 respectively. As a result different areas of the liquid crystal layers on the front surfaces of liquid crystal light valves 41,42 receive different voltage, as if the liquid crystal light valves 41,42 were divided into many virtual pixels. Since the twist angle of liquid crystal molecules is zero in both liquid crystal light valves 41,42 and the polarization direction of linearly polarized incident illuminating light is in parallel with the orientation of the liquid crystal molecules, both liquid crystal light valves 41,42 work in pure phase modulation mode.

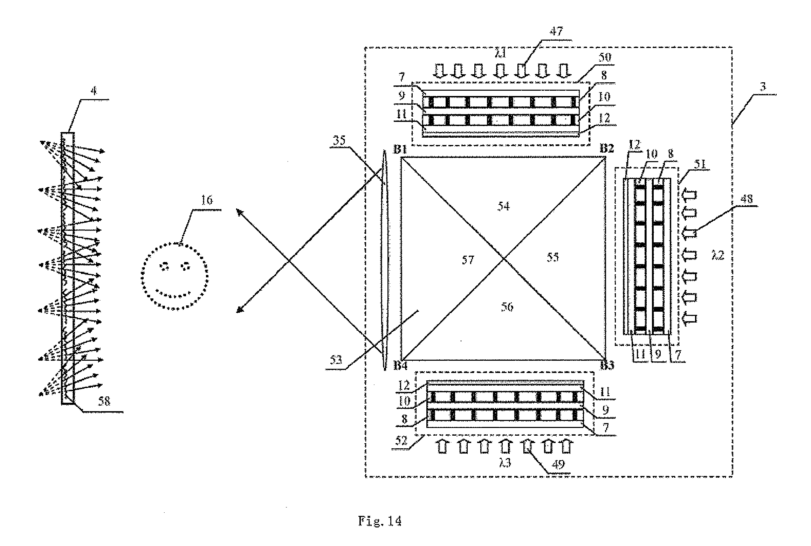

Since the devices in Fig.11-13 use one set of reflective or transmission liquid crystal panels for color 3D display, the number of available color voxels is one third of that of monochrome voxels. To produce more color voxels, the device in Fig.14 employed three sets of integrated-amplitude-phase-modulator-arrays, one set for one primary color.

Fig.14 is a schematic diagram of a projection type color 3D display device using integrated-amplitude-phase-modulator-arrays and reflective holographic optical elements. The amplitude-phase-modulator-array 3 in Fig.14 is made up of three sets of sub-amplitude-phase-modulator-arrays 50, 51, 52, a cubic beam splitter 53 and an optical lens 35. The optical lens 35 is placed in front of the exit surface B1-B4 of cubic beam splitter 53. The optic axis of optical lens 35 coincides with the central axis of exit surface B1-B4 of the cubic beam splitter 53. Three sets of sub-amplitude-phase-modulator-arrays 50, 51, 52 are placed in front of the remaining three incidence surfaces B1-B2, B2-B3 and B3-B4 of cubic beam splitter 53. The optic axes of sub-amplitude-phase-modulator-arrays 50, 51, 52 coincide respectively with that of incidence surfaces B1-B2, B2-B3, B3-B4. The cubic beam splitter 53 is made up of four rectangular prisms 54, 55, 56, 57 glued together along their right angle surfaces. The right angle surfaces of rectangular prisms 54, 55, 56, 57 have been coated with narrow band reflective films for different primary colors. For example, the surfaces along diagonal B2-B4 have been coated with a narrow band reflective film for the first primary color $\lambda_1$, while the surfaces along diagonal B1-B3 have been coated with a narrow band reflective film for the third primary color $\lambda_3$. As a result, the first primary color light with wavelength $\lambda_1$ coming in from the incidence surface B1-B2 will be reflected by the surface B2-B4 and exit from the exit surface B1-B4. The third primary color light with wavelength $\lambda_3$ coming in from the incidence surface B3-B4 will be reflected by the surface B1-B3 and exit from the exit surface B1-B4. The second primary color light with wavelength $\lambda_2$ coming in from the incidence surface B2-B3 will penetrate the cubic beam splitter 53 and exit from the exit surface B1-B4. The incidence surfaces B1-B2, B2-B3, B3-B4 and exit surface B1-B4 have all been coated with broad band transmission thin films. Although with much smaller size, the sub-amplitude-phase-modulator-arrays 50, 51, 52 have the same structure as the integrated-amplitude-phase-modulator-array in Fig.1. Since their pixels are accurately aligned with each other, when projected behind the reflective holographic-optical-element-array 4 their images overlap with each other, creating secondary light sources with periodic distribution. Next these coherent secondary light sources with periodic distribution are transformed into coherent secondary light sources with random distribution by reflective holographic-optical-element-array 4.

In Fig.14 the reflective-holographic-element-array 4 contains many reflective-holographic-elements 58. Since the pixels of integrated-amplitude-phase-modulato-arrays 50, 51, 52 are projected onto the same reflective-holographic-element-array 4 and aligned with the periodically arranged reflective-holographic-elements 58, each reflective-holographic-element 58 receives three primary color lights at the same time. So the interference pattern on each reflective-holographic-element 58 should be recorded for each primary color. The final hologram is a stack of three sets of interference patterns, one set for one primary color.

**Claims**

1.  A 3D display device based on random constructive interference comprising:

    a coherent light source that emits coherent laser beam of three primary colors;
    an illuminating optic system disposed to receive the thin coherent laser beam of three primary colors emitted from the coherent light source and transform it into evenly distributed wide coherent laser beams with each primary color separated from each other;
    an amplitude-phase-modulator-array disposed to modulate the amplitudes and phases of the wide coherent laser beams of three primary colors emitted from the illuminating optic system to produce an independent-sub-laser-beam-array; and
    a coherent-secondary-light-source-generator-array disposed and aligned with the amplitude-phase-modulator-array, so that each coherent-secondary-light-source-generator of the coherent-secondary-light-source-generator-array respectively receives an independent-sub-laser-beam from one corresponding amplitude-phase-modulator in the amplitude-phase-modulator-array to create a coherent secondary light source array in which the positions of the secondary light sources are of a random distribution and the light cones emitted by the secondary light sources overlap within the 3D imaging volume.

2.  The device of claim 1, wherein the coherent-secondary-light-source-generator-array is made up of a transmission holographic-optical-element-array, in which each transmission holographic optical element bears interference patterns that transmits and focuses an independent-sub-laser-beam into a secondary coherent light source with random position; or
    the coherent-secondary-light-source-generator-array is made up of a reflective holographic-optical-element-array, in which each reflective holographic optical element bears interference patterns that reflects and focuses an independent-sub-laser-beam into a secondary coherent light source with random position.

3.  The device of claim 1 or claim 2, wherein the interference patterns on a transmission holographic optical element are a stack of three groups of interference patterns, each group being made for each primary color; or
    the interference patterns on a reflective holographic optical element are a stack of three groups of interference patterns, each group being made for each primary color.

4.  The device of claim 1, wherein the coherent-secondary-light-source-generator-array is made up of a binary-optical-element-array, in which each binary optical element plays the functions of a microlens and a microprism; the microstructure on its surface is designed to focus an independent-sub-laser-beam into a secondary coherent light source with random position.

5.  The device of claim 1, wherein the coherent-secondary-light-source-generator-array is made up of a reflective-microlens-array; the optic axis of each reflective microlens is deflected to focus an independent-sub-laser-beam into a secondary coherent light source with random position; or
    the coherent-secondary-light-source-generator-array is made up of a transmission-microlens-array; the optic axis of each transmission microlens is deflected to focus an independent-sub-laser-beam into a secondary coherent light source with random position.

6. The device of claim 1, wherein the amplitude-phase-modulator-array is made up of transmission pure-phase-modulation liquid crystal panels, within which the orientations of the oriented films for liquid crystal molecules on both plates beside the liquid crystal layer are the same to make a zero twist angle of liquid crystal molecules, meanwhile the thickness of the liquid crystal layer and the birefractive index difference of liquid crystal material are chosen to obtain a phase modulation range of 0~2π; or
the amplitude-phase-modulator-array is made up of reflective pure-phase-modulation liquid crystal panels, within which the orientations of the oriented films for liquid crystal molecules on both plates beside the liquid crystal layer are the same to make a zero twist angle of liquid crystal molecules, meanwhile the thickness of the liquid crystal layer and birefractive index difference of liquid crystal material are chosen to obtain a phase modulation range of 0~2π.

7. The device of claim 1 or 6, wherein the amplitude-phase-modulator-array is an integrated panel consisting of a rear plate, the first liquid crystal layer, a middle plate, the second liquid crystal layer, a front plate and a polarizer glued on the front plate; the rear plate, the first liquid layer and the middle plate make up the first gray scale liquid crystal panel, while the middle plate, the second liquid crystal layer, the front plate and the polarizer make up the second gray scale liquid crystal panel; the pixels of both the first gray scale liquid crystal panel and the second gray scale liquid crystal panel are aligned with each other, possessing the same two-dimensional periodic arrangement;
wherein the first gray scale liquid crystal panel is a transmission pure-phase-modulation liquid crystal panel, while the second gray scale liquid crystal panel is set in amplitude-mostly mode by turning the orientations of the oriented films on the middle plate and the front plate and the polarizing direction of the polarizer.

8. The device of claim 1, wherein the illuminating optic system that receives the thin coherent laser beam of three primary colors emitted from the coherent light source and transform it into evenly distributed wide beams with each primary color separated from each other consists of two perpendicularly placed groups of parallel planar beam splitter array;
wherein, each parallel planar beam splitter in the first group of parallel planar beam splitter array has the same shape and the same dimension; they are placed in parallel along an axis with the same orientation and equal interval between them; adjust the interval between adjacent parallel planar beam splitters in the first group, meanwhile increase the reflectivity of each beam splitter along the propagation direction of light so that after the reflection of the first group of parallel planar beam splitter array the parallel thin laser beam emitted from the polarized coherent light source turns into an evenly and continuously distributed line shaped parallel laser beam;
each parallel planar beam splitter in the second group of parallel planar beam splitter array has the same shape and the same dimension; they are placed in parallel along an axis with same orientation and equal interval between them; adjust the interval between adjacent parallel planar beam splitters in the second group, meanwhile increase the reflectivity of each beam splitter along the propagation direction of light so that after the reflection of the second group of parallel planar beam splitter array the line shaped parallel laser beam emitted from the first group of beam splitters turns into an evenly and continuously distributed wide parallel laser beam;
each beam splitter in the first and the second groups of parallel planar beam splitter array is coated over the whole beam splitter or part of the beam splitter with a broad band reflective thin film that reflects all the three primary color laser beams or a narrow band reflective thin film that reflect only one of the three primary color laser beams so that on the cross section of the wide parallel laser beam emitted from the second groups of parallel planar beam splitter array the three primary color laser beams appear alternatively along row direction, or column direction or both row and column directions; all the incidence surfaces and exit surfaces of the first and second groups of parallel planar beam splitter array are optical polished and coated with a broad band transmission thin film.

9. The device of claim 1, wherein the amplitude-phase-modulator-array consists of three sets of sub-amplitude-phase-modulator-arrays, a cubic beam splitter with three incidence surfaces and one exit surface and an optical lens; the optical lens is placed in front of the exit surface of cubic beam splitter with its optical axis coincides with central axis of the exit surface of cubic beam splitter; three sets of sub-amplitude-phase-modulator-arrays are respectively placed in front of the three incidence surfaces of cubic beam splitter with their optic axes coincide respectively with those of three incidence surfaces of cubic beam splitter;
the cubic beam splitter is made up of four rectangular prisms which are glued together along their right angle surfaces; the right angle surfaces of rectangular prisms are coated with narrow band reflective films for one of three primary colors so that three primary color lights which are incident respectively from three incidence surfaces will exit from the exit surface via reflection or transmission; all the incidence surfaces and the exit surface are coated with broad band transmission films; the pixels of three sets of sub-amplitude-phase-modulator-arrays are aligned with each other so that after projection by the optical lens their images overlap on the image plane.

Fig. 1

Fig. 2b

Fig. 2a

Fig.3

Fig. 4

Fig. 5

EP 2 482 117 A1

Fig.6

Fig. 7a

Fig. 7b

Fig. 7c

Fig. 7d

Fig. 8

Fig. 9b

Fig. 9a

Fig. 10

Fig. 11

Fig.12

Fig. 13

Fig. 14

EP 2 482 117 A1

# INTERNATIONAL SEARCH REPORT

| International application No. |
| --- |
| PCT/CN2010/077182 |

**A. CLASSIFICATION OF SUBJECT MATTER**

G02B 27/22 （2006.01） i

According to International Patent Classification (IPC) or to both national classification and IPC

**B. FIELDS SEARCHED**

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNKI,CPRS,WPI,EPODOC:PRIMARY,COLO?R?,THREE?DIMENSIONAL,IMAG+,DISPLAY+

**C. DOCUMENTS CONSIDERED TO BE RELEVANT**

| Category* | Citation of document, with indication, where appropriate, of the relevant passages | Relevant to claim No. |
| --- | --- | --- |
| A | CN101226325A (LI, ZHiyang) 23 Jul. 2008(23.07.2008) the whole document | 1-9 |
| A | CN1392437A (ATE SCI RES CO) 22 Jan. 2003(22.01.2003) the whole document | 1-9 |
| A | CN201199289Y (LI, ZHiyang) 25 Feb. 2009(25.02.2009) the whole document | 1-9 |
| A | JP2006174258A (NAMCO BANDAI GAMES INC) 29 Jun. 2006(29.06.2006) the whole document | 1-9 |
| A | JP9068917A (OLYMPUS OPTICAL CO) 11 Mar. 1997(11.03.1997) the whole document | 1-9 |
| A | US6247816B1 (IBM) 19 Jun. 2001(19.06.2001) the whole document | 1-9 |

☒ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 Nov. 2010(16.11.2010) | **09 Dec. 2010 (09.12.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>**WU, Junfang**<br><br>Telephone No. (86-10)62085573 |
| --- | --- |

Form PCT/ISA /210 (second sheet) (July 2009)

# INTERNATIONAL SEARCH REPORT

International application No.

PCT/CN2010/077182

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP2004252008A (JAPAN BROADCASTING CORP)<br><br>09 Sep. 2004(09.09.2004) the whole document | 1-9 |

Form PCT/ISA /210 (continuation of second sheet ) (July 2009)

## INTERNATIONAL SEARCH REPORT
### Information on patent family members

| | International application No. |
|---|---|
| | PCT/CN2010/077182 |

| Patent Documents referred in the Report | Publication Date | Patent Family | Publication Date |
|---|---|---|---|
| CN101226325A | 23.07.2008 | WO2009097746A1 | 13.08.2009 |
| | | CN101226325B | 02.06.2010 |
| CN 1392437A | 22.01.2003 | US2002190922A1 | 19.12.2002 |
| | | JP2003107399A | 09.04.2003 |
| | | TW567388A | 21.12.2003 |
| | | US6961045B2 | 01.11.2005 |
| CN201199289Y | 25.02.2009 | None | |
| JP2006174258A | 29.06.2006 | None | |
| JP9068917A | 11.03.1997 | None | |
| US6247816B1 | 19.06.2001 | JP11119153A | 30.04.1999 |
| | | JP3154691B2 | 09.04.2001 |
| JP2004252008A | 09.09.2004 | None | |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200810046861 A

- CN 200810046861